# EUROPÄISCHE PATENTSCHRIFT

(11) **EP 3 954 629 B1**
(45) Veröffentlichungstag und Bekanntmachung des Hinweises auf die Patenterteilung: **18.02.2026**
(21) Anmeldenummer: 20190956.1
(22) Anmeldetag: 13.08.2020
(51) Int. Cl.: B65D 77/22, A47G 21/04, B65D 5/42, B65D 77/24, G01F 19/00

(54) **PRODUKTKOMBINATION AUS EINEM PACKUNGSEINSATZ UND EINER BEILAGE**
PRODUCT COMBINATION COMPRISING A PACKAGING INSERT AND AN INSERT
COMBINAISON DE PRODUITS COMPRENANT UN INSERT D'EMBALLAGE ET UNE CALE

(43) Veröffentlichungstag der Anmeldung: 16.02.2022
(73) Patentinhaber: Edelmann GmbH, 89518 Heidenheim (DE)
(72) Erfinder: Eberhardt, Veit, 89537 Giengen (DE); Sieber, Helmut, 89518 Heidenheim (DE)
(74) Vertreter: Caspary, Karsten

(56) Entgegenhaltungen:
- DE-A1- 4 222 531
- GB-A- 2 547 098
- JP-A- H09 159 506
- US-A1- 2016 341 590

## Beschreibung

Die vorliegende Erfindung betrifft eine Produktkombination aus einem teilbaren Packungseinsatz, der zum Einlegen in ein Verpackungsbehältnis geeignet ist, wie sie in der Pharmaindustrie, Lebensmittelindustrie, Kosmetikindustrie und dergleichen verwendet werden und einer Beilage. Insbesondere kann der teilbare Packungseinsatz in Verbindung mit Behältern aus Karton- oder Kunststoffmaterial eingesetzt werden.

Als zusätzliche Verpackungsinhalte kommen bisher beispielsweise in der Pharmabranche Packungsbeilagen, manchmal auch Beipackzettel genannt, aus Dünndruckpapier zum Einsatz, die mehrfach gefaltet und anschließend dem Arzneimittelprodukt beigefügt werden, bevor dieses zum Beispiel in einer Faltschachtel verpackt und anschließend zum Verkauf ausgeliefert wird. Die Möglichkeiten, weitere Produkte als zusätzliche Verpackungsinhalte einem Hauptprodukt hinzuzufügen, sind bisher begrenzt, weil ein weiteres Produkt zusätzlichen Aufwand bedeutet und insbesondere je nach Art des Produkts bei komplexen Abpackmaschinen und -straßen Ergänzungen und Abänderungen nach sich ziehen, die mit hohen Zusatzkosten verbunden sind.

Die JP H01 124526 U offenbart ein Messbehältnis, das aus einem einstückigen Kartonzuschnitt ausgeschnitten und derart faltbar ist, dass es aus einem flachen Zustand durch einfaches Aufdrücken an einer Kante zur Verwendung, beispielsweise dem Dosieren von Flüssigkeiten oder Pulvern, aufgefaltet werden kann.

Die US 2016/341590 A1 offenbart ein zusammensetzbares Zusatzprodukt als Packungseinsatz, das aus einem flächigen, einteiligen Zuschnitt herstellbar ist. Als Zusatzprodukt wird beispielsweise ein zusammensetzbarer Löffel oder eine Schaufel vorgeschlagen. Der Packungseinsatz befindet sich nach der Stanzung in einem umgebenden Rahmen und kann aus diesem zum Zusammensetzen und Verwenden des Packungseinsatzes herausgelöst werden.

Die JP H09 159506 A schlägt in ähnlicher Weise einen Packungseinsatz, insbesondere einen Löffel, als Zusatzprodukt vor, der aus einem einteiligen Zuschnitt herstellbar ist. Der einteilige Zuschnitt weist einen Rahmen auf in dem das Zusatzprodukt in einem flächigen Zustand angeordnet ist. Der Packungseinsatz wird samt Zusatzprodukt in eine Faltschachtel eingelegt. Zur Verwendung des Zusatzprodukts kann dieses von dem umgebenden Rahmen gelöst und zusammengesetzt werden.

Die DE 42 22 531 A1 offenbart ein Zusatzprodukt, das in einen einteiligen Zuschnitt einer Faltschachtel integriert ist. Das Zusatzprodukt ist insbesondere hier ein Messbecher für Waschpulver. Das Zusatzprodukt ist dabei nicht innerhalb eines umgebenden Rahmen angeordnet, sondern mittels einer Abreißlinie an einem Randbereich der Faltschachtel befestigt, der zumindest teilweise den Deckel der Faltschachtel bildet. Das Zusatzprodukt kann von dem Deckel getrennt und zusammengesetzt werden.

Die GB 2 547 098 A betrifft eine Packungsbeilage, die ein Besteckteil als ein Zusatzprodukt aufweist. Das Besteckteil wird aus einem einteiligen Materialzuschnitt gebildet, der aus zwei Teilen besteht. Diese Teile sind durch Falze voneinander getrennt. Der erste Teil wird als das Besteckteil benutzt. Der zweite Teil bedeckt den ersten Teil, bevor das Besteck verwendet wird. Das Besteck wird in einer flachen und geschlossenen Form beigelegt und kann anschließend zu dessen Verwendung zusammengesetzt werden. Alternativ ist gleichermaßen vorgesehen, dass das Besteckteil ein Abschnitt eines größeren Verpackungszuschnitts ist, der abtrennbar ist.

Es ist daher wünschenswert und die Aufgabe der vorliegenden Erfindung, eine Produktkombination aus einem Packungseinsatz und einer Beilage bereitzustellen, die einen Mehrwert für den Benutzer des Hauptprodukts bietet, im Wesentlichen auf denselben Vorrichtungen bzw. mit den gleichen Herstellungsverfahren wie bisher verarbeitet werden kann, die Komplexität des Verpackungsprozesses nicht erhöht und somit kaum zusätzliche Kosten erzeugt.

Diese Aufgabe wird durch den Gegenstand des Anspruchs 1 der vorliegenden Erfindung gelöst. Vorteilhafte Ausgestaltungen der Erfindung sind Gegenstand der abhängigen Ansprüche.

Erfindungsgemäß ist eine Produktkombination aus einem teilbarer Packungseinsatz und einer Beilage geeignet zum Einlegen in ein Verpackungsbehältnis, wobei der teilbare Packungseinsatz einen einteiligen Zuschnitt einen Rahmen und ein Zusatzprodukt umfasst, wobei das Zusatzprodukt und der Rahmen in einem ersten Zustand verbunden sind, so dass der Packungseinsatz eine im Wesentlichen flache Materiallage mit mindestens einem Führungsrand bildet und wobei die Produktkombination dazu eingerichtet ist, in einer Verarbeitungsmaschine geführt zu werden, und wobei das Zusatzprodukt in einem zweiten, auf den ersten Zustand folgenden Zustand von dem Rahmen gelöst und funktionsgemäß zur Verwendung eingerichtet ist. Ferner ist der Packungseinsatz und die Beilage lösbar miteinander verbunden. Die Kombination aus einteiligem Zuschnitt und der flachen Materiallage mit Führungsrand hat den Vorteil, dass eine derartige Produktkombination in bereits bekannten Verpackungsmaschinen bzw. Verpackungsstraßen verwendet werden kann, ohne dass diese durch einen komplexen Umbau verändert werden müssten. Damit entsteht ein Zusatznutzen, weil einem Verpackungsbehältnis zusätzlich ein funktionales Produkt beigefügt werden kann. Die Herstellungsverfahren und Verpackungslinien der Industrie brauchen für die Verwendung der erfindungsgemäßen Produktkombination nicht wesentlich verändert werden, so dass trotz des erheblichen Mehrwerts für den Käufer des Produkts die zusätzlichen Kosten bei der Herstellung nicht wesentlich höher sind.

Bevorzugt ist der Packungseinsatz aus Kartonmaterial oder Kunststoffmaterial ausgebildet. Kartonmaterial wird in der Verpackungsindustrie seit langem verwendet, ist günstig, ein nachhaltiger Rohstoff und auch in der Verarbeitung flexibel und damit sehr bewährt. Kunststoffmaterial ist insbesondere in der Lebensmittelindustrie zunehmend in Verwendung und ebenfalls preisgünstig verfügbar.

Mit weiterem Vorteil ist auf dem Packungseinsatz im ersten Zustand mindestens eine Stanzlinie ausgebildet, vorzugsweise zwischen dem Zusatzprodukt und dem Rahmen. Optional kann die Stanzlinie zusätzlich durch Erwärmen des Materials erzeugt werden, wie es bei Kunststofffolien üblich ist. Durch diese Stanzlinie wird eine Trennlinie oder Sollbruchlinie geschaffen, entlang der ein Benutzer das Zusatzprodukt auf einfache Weise vom Rahmen, üblicherweise mit der Hand, trennen kann.

Als besonders vorteilhaft hat es sich herausgestellt, wenn der Packungseinsatz im ersten Zustand im Wesentlichen rechteckig ausgebildet ist. Durch die flache Ausbildung der Materiallage mit Führungsrand und der zusätzlichen rechteckigen Form ist der Packungseinsatz auf die Verwendung in herkömmlichen Aufrichte- oder Klebemaschinen optimiert. Dadurch können deutlich höhere Geschwindigkeiten gefahren werden.

Dabei weist die flache Materiallage vorteilhafterweise auf mindestens einer Seite eine Lasche auf. Diese Lasche kann als Griff dienen, um das Herausnehmen zu erleichtern. Auf der Lasche kann ein Klebpunkt angebracht sein und die Lasche kann mittels einer Stanzlinie einfach lösbar am Rahmen oder am Zusatzprodukt angeordnet sein. Wie bei Karton- oder Kunststoffschachteln üblich kann die Form der Lasche halbrund, rechteckig, trapezförmig, dreieckig oder auch unregelmäßig ausgebildet sein, je nach Ausbildung der Anwendung.

Mit weiterem Vorteil kann die flache Materiallage auf mindestens einer Seite eine Ausnehmung aufweisen. Diese Ausnehmung kann bevorzugt dazu dienen, für den Benutzer einen Eingriffspunkt für das Lösen des Rahmens vom Zusatzprodukt zu bieten, wobei der Benutzer vorzugsweise jeweils an gegenüberliegenden Enden der Ausnehmung angreift. Die Ausnehmung kann eine runde, ovale oder polygonale Form aufweisen.

Gemäß der vorliegenden Erfindung ist es vorteilhaft, wenn das Zusatzprodukt aus nachfolgender Gruppe ausgewählt ist: Dosierhilfe, Öffnungshilfe, Spatel, Griff, Löffel, Gabel, Messer oder einer Kombination aus den vorgenannten. Bei der Dosierhilfe kann es sich beispielsweise um ein faltbares Messbehältnis handeln, wie es oben beschrieben wurde. Die Gestaltung des Zusatzprodukts hängt von der Eigenschaft des Hauptprodukts im Verpackungsbehältnis ab. Beispielsweise kann es sinnvoll sein, zusammen mit der Packungsbeilage für ein oral einzunehmendes flüssiges Medizinprodukt, einen Löffel beizufügen, mit dem sich die Menge des Medizinprodukts auf einfache Weise dosieren lässt. Vorstellbar ist auch ein Griff mit einem Sägezahnprofil ähnlich einem Messer, mit dem sich das in einer Kunststofffolie befindliche Hauptprodukt öffnen lässt.

Die Beilage kann bevorzugt eine Packungsbeilage, ein Folienbehälter, ein Etikett, eine Probepackung oder eine Kombination daraus sein. Die Verbindung zwischen dem Packungseinsatz und der Beilage erfolgt vorteilhafterweise durch mindestens einen Klebpunkt, durch eine Banderole, durch eine Heftverbindung, durch eine magnetische Verbindung, durch eine Klettverschlussverbindung oder durch eine Haftmeltverbindung.

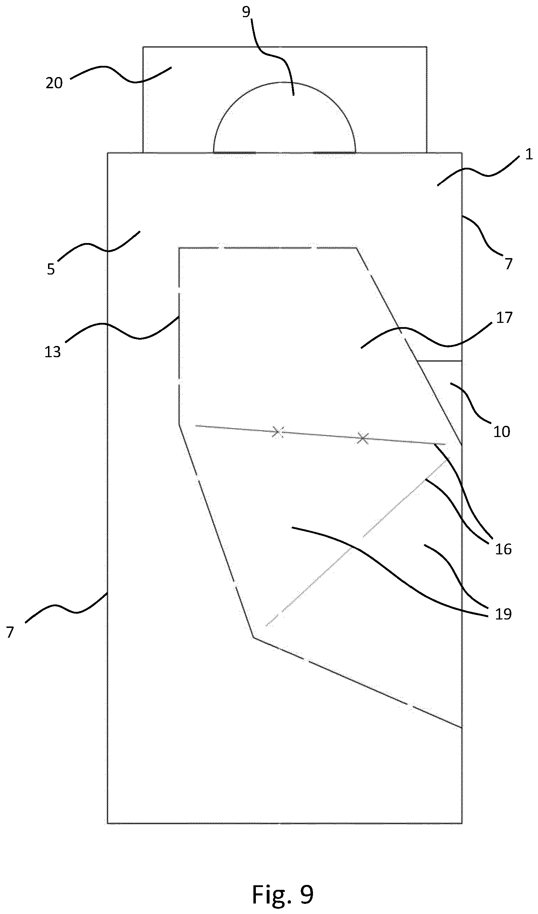

Diese und weitere Vorteile der vorliegenden Erfindung werden nachfolgend anhand der Beschreibung der Figur 9 und zum besseren Verständnis anhand verschiedener, nicht erfindungsgemäßen Ausführungsformen beschrieben, in denen:
- Fig. 1: eine Darstellung einer Ausführungsform des Packungseinsatzes in Form eines einstückigen Zuschnitts zeigt;
- Fig. 2: eine Darstellung eines herausgetrennten Zusatzprodukts in Funktion gemäß der in Fig. 1 dargestellten Ausführungsform zeigt;
- Fig. 3: eine Darstellung einer zweiten Ausführungsform des Packungseinsatzes in Form eines einstückigen Zuschnitts zeigt;
- Fig. 4: eine Darstellung eines herausgetrennten Zusatzprodukts gemäß der in Fig. 3 dargestellten Ausführungsform zeigt;
- Fig. 5: eine Darstellung einer zweiten Ausführungsform des Packungseinsatzes in Form eines einstückigen Zuschnitts zeigt;
- Fig. 6: eine Darstellung eines herausgetrennten Zusatzprodukts gemäß der in Fig. 5 dargestellten Ausführungsform zeigt;
- Fig. 7: eine Darstellung einer zweiten Ausführungsform des Packungseinsatzes in Form eines einstückigen Zuschnitts zeigt;
- Fig. 8: eine Darstellung eines herausgetrennten Zusatzprodukts gemäß der in Fig. 7 dargestellten Ausführungsform zeigt;
- Fig. 9: eine Darstellung einer erfindungsgemäßen Produktkombination umfassend den Packungseinsatz gemäß Fig. 1 und eine Packungsbeilage in konfektioniertem, zusammen- und vorgeklebtem Zustand zeigt;
- Fig. 10: eine Darstellung einer alternativen, nicht erfindungsgemäßen Produktkombination umfassend den Packungseinsatz gemäß Fig. 1 mit einer Faltschachtel zeigt, und
- Fig. 11: eine weitere Darstellung alternativen, nicht erfindungsgemäßen Produktkombination des Packungseinsatzes ähnlich Fig. 1 mit einer Faltschachtel zeigt.

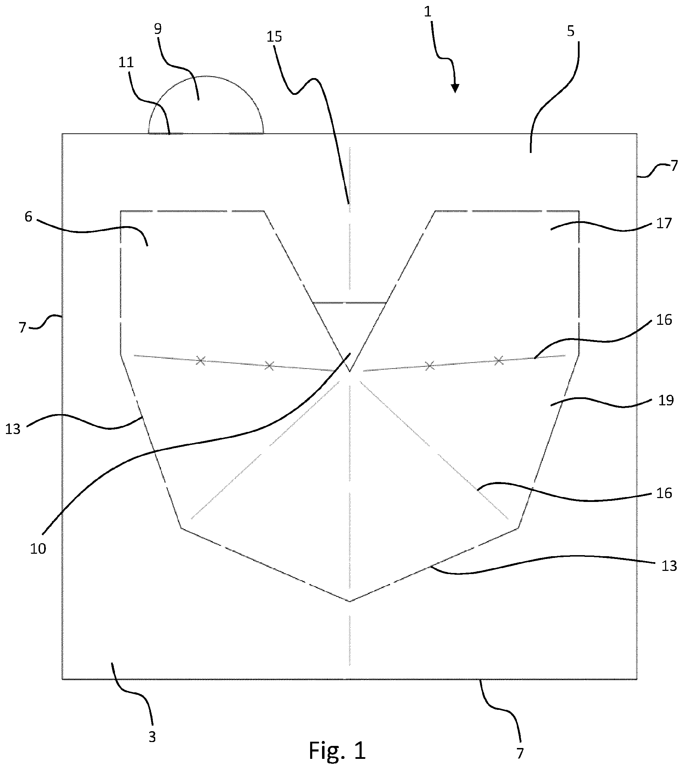

Fig. 1 zeigt eine Darstellung einer Ausführungsform des Packungseinsatzes 1 in Form eines einstückigen Zuschnitts 3, der in der hier dargestellten Ausführungsform rechteckig ausgebildet ist. Der Packungseinsatz 1 bzw. der Zuschnitt 3 umfasst einen Rahmen 5, der um ein Zusatzprodukt 6 herum ausgebildet ist, wobei der Rahmen 5 und das Zusatzprodukt 6 an einer Trennstanzlinie 13 aneinander angrenzen. Der Zuschnitt 3 weist eine Mittellinie 15 auf, die im Wesentlichen eine senkrechte Symmetrieachse definiert. Oben und unten begrenzt den Zuschnitt 3 jeweils ein gerader Führungsrand 7, mit der Ausnahme, dass am oberen Führungsrand 7 auf der in der Darstellung linken Seite eine Lasche 9 ausgebildet ist, die mit dem Rahmen 5 über eine Falzlinie 11 verbunden ist. Die Form der Lasche 9 ist im Wesentlichen halbkreisförmig, wobei sie auch eine andere Form annehmen kann.

Das Zusatzprodukt 6 ist in der hier dargestellten Ausführungsform eine Dosierhilfe, die links und rechts jeweils ein Grifffeld 17 und je zwei Behälterfelder 19 aufweist, wobei zwischen dem Grifffeld 17 und dem Behälterfeld 19 eine Falzlinie 16 und auch zwischen den angrenzenden Behälterfeldern 19 jeweils eine Falzlinie 16 ausgebildet ist. Die Falzlinien 16 sind derart ausgerichtet, dass sie auf einen Mittelpunkt hinzeigen. Ausgehend von dem Mittelpunkt ist symmetrisch zur Mittellinie 15 eine Ausnehmung 10 ausgebildet, die in der hier dargestellten Ausführungsform ein gleichschenkeliges Dreieck darstellt.

Es ist anzumerken, dass der in Fig. 1 dargestellte Zuschnitt 3 die Ausgangsform bzw. den Ausgangszustand des Packungseinsatz 1 darstellt, nämlich den Zustand, wo er beispielsweise aus einem flachen Kartonblatt mittels Stanzen oder Schneiden gebildet wurde.

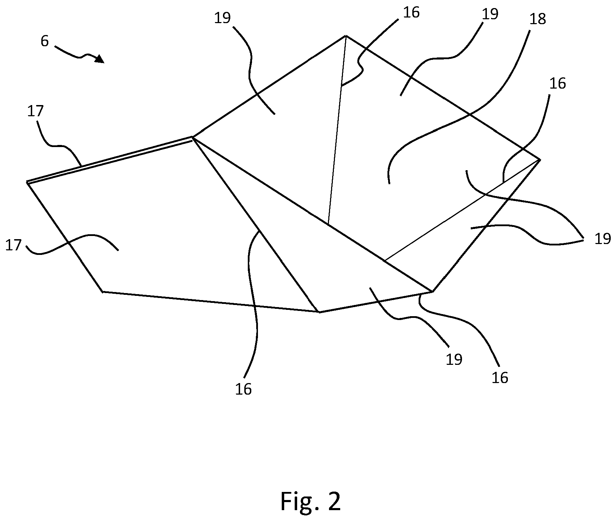

Fig. 2 zeigt eine schematische Darstellung des Zusatzproduktes 6 aus der in Fig. 1 dargestellten Ausführungsform. Wie bereits erwähnt ist das Zusatzprodukt 6 eine Dosierhilfe, deren Stützbereich 18 von vier Behälterfeldern 19 begrenzt wird, die wiederum an Falzlinien 16 aneinander angrenzen. Die Grifffelder 17 aus dem einstückigen Zuschnitt 3 sind aufeinander geklebt und bilden so einen ebenen Griffbereich.

An dieser Stelle ist festzuhalten, dass die teilweise Klebung der Grifffelder 17 bereits in einem Zustand stattfindet, in dem der Rahmen 5 und das Zusatzprodukt 6 des Packungseinsatzes 1 noch nicht voneinander getrennt sind. Der Packungseinsatz 1 wird an der Mittellinie 15 aufeinander gefaltet und partiell verklebt, d. h. sowohl der Rahmen 5 als auch das Zusatzprodukt 6 auf den entsprechenden, sich gegenüberliegenden Feldern. Dies ist wichtig, da die sogenannte Konfektionierung des Packungseinsatzes 1 möglichst viele Vorstufen der Herstellung aufweisen soll, so dass in diesem Fall die Dosierhilfe nach dem Herauslösen aus dem Rahmen 5 entlang der Trennstanzlinie 13 nur noch derart gefaltet werden muss, dass der Stützbereich 18 geöffnet wird und damit bereit ist, zum Dosieren das Schüttgut aufzunehmen. Eine Bedienperson kann die Dosierhilfe bzw. das Zusatzprodukt 6 mit den Fingern am Griffbereich anfassen und aufnehmen. Auf weitere Vorteile der flachen Materiallage wird unten unter Bezugnahme auf Fig. 9 verwiesen.

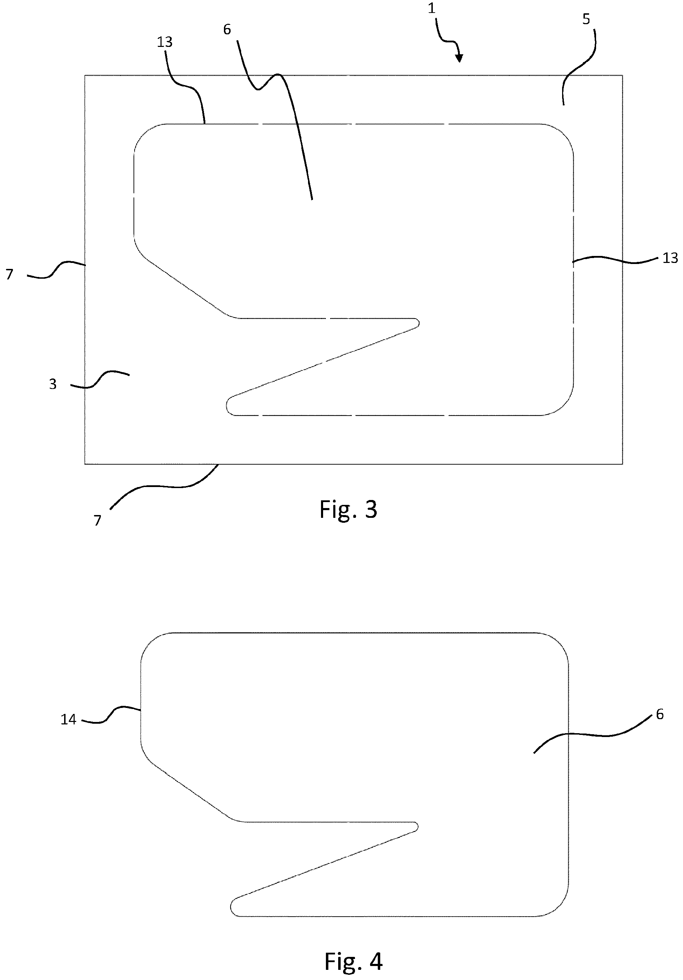

Fig. 3 und Fig. 4 beziehen sich auf eine zweite Ausführungsform des erfindungsgemäßen Packungseinsatz 1, wobei das Zusatzprodukt 6 eine Öffnungshilfe bzw. einen Brieföffner darstellt. Für das Material des Zuschnitts 3 kann hier beispielsweise ein festes Kartonmaterial aber auch ein Kunststoffmaterial gewählt werden. Die Trennstanzlinie 13 zwischen Rahmen 5 und Zusatzprodukt 6 ist im Falle eines Kunststoffmaterials durch eine zusätzliche Wärmebehandlung gebildet worden, so dass eine vordefinierte Schwächung des Materials im Bereich der Trennstanzlinie 13 dafür sorgt, dass das Zusatzprodukt 6 aus dem Rahmen 5 durch eine Bedienperson auf einfache Weise herausgebrochen werden kann. Im Unterschied zur Dosierhilfe als Zusatzprodukt, wie in den Fig. 1 und 2 gezeigt, ist bei dem Brieföffner als Zusatzprodukt anzumerken, dass der Zuschnitt 3 nicht erst gefaltet werden muss, bevor er einer Verpackung oder einem Hauptprodukt beigelegt bzw. hinzugefügt wird.

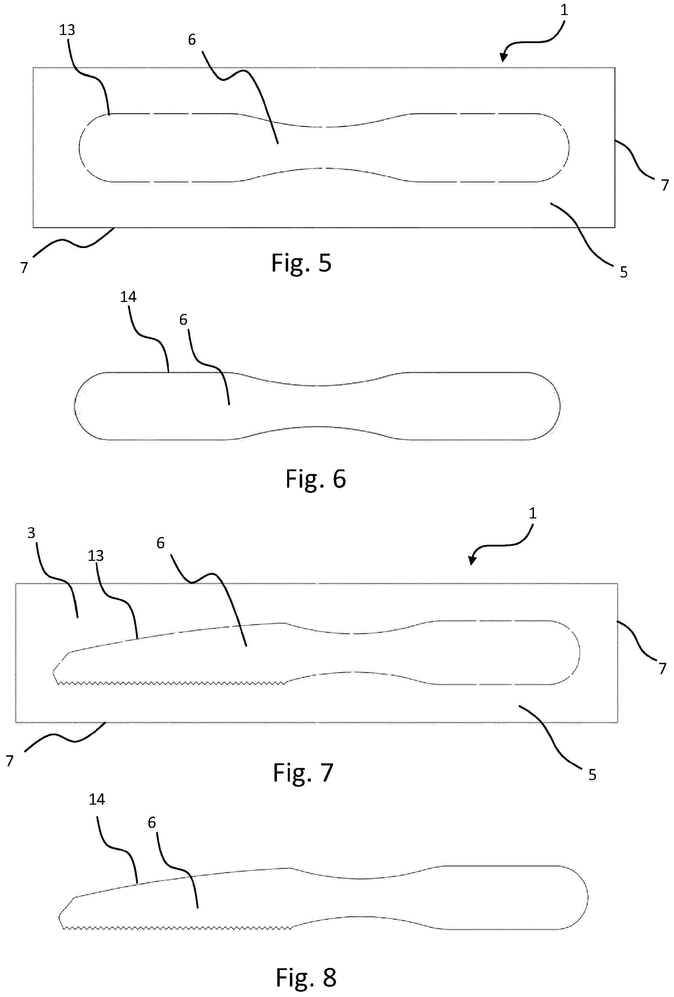

Ähnliches gilt für die dritte Ausführungsform, die in Fig. 5 und Fig. 6 abgebildet ist, in denen das Zusatzprodukt 6 als Spatel ausgebildet ist, die beispielsweise bei Kosmetik- oder pharmazeutischen Produkten beigefügt werden. Auch beim Spatel als Zusatzprodukt 6 ist es zweckmäßig, wenn das Grundmaterial des Packungseinsatzes 1 Kunststoff oder Karton bzw. Papier ist.

Auch die in den Figuren 7 und 8 dargestellte vierte Ausführungsform des erfindungsgemäßen Packungseinsatz 1 hat einen ähnlichen Aufbau wie die oben beschriebenen zweiten und dritten Ausführungsformen. Das Zusatzprodukt 6 ist in der vierten Ausführungsform ein Messer mit einem Griffbereich sowie einem mit Sägezahnprofil ausgebildeten Schneidbereich. Ebenso wie für den Brieföffner und den Spatel gilt hier, dass das Material vorzugsweise derart ausgebildet ist, so dass eine ausreichende Festigkeit bei Verwendung des Messers gegeben ist.

Auf eine ausführliche Erläuterung der einzelnen Elemente der dritten und vierten Ausführungsform wird an dieser Stelle verzichtet, da sie bereits oben unter Bezugnahme auf die ersten beiden Ausführungsformen detailliert beschrieben wurden.

In Fig. 9 ist eine erfindungsgemäße Produktkombination des Packungseinsatzes gemäß Fig. 1 mit einer Packungsbeilage bzw. einem Beipackzettel in konfektioniertem Zustand abgebildet. Produktkombination heißt in diesem Falle, dass der Packungseinsatz 1 zusammen mit einer Packungsbeilage 20 derart konfiguriert ist, dass sie beispielsweise einem Hauptprodukt in einer Faltschachtel oder einem anderen Verpackungsbehältnis als Ganzes maschinell oder manuell beigefügt werden kann. Damit können in einer Verpackungsstraße, wo beispielsweise Hauptprodukte zusammen mit Packungsbeilagen in vorkonfektionierten Faltschachteln eingefügt werden, zusätzliche Produkte in einer flexiblen Art und Weise vorhanden sein, ohne den gesamten Verpackungsprozess zu verändern und damit erhöhte Kosten zu erzeugen. Insbesondere können bei einer derartigen Produktkombination bisher verwendete Verpackungsmaschinen und -abläufe zum Tragen kommen.

In Fig. 9 erkennt man im oberen Bereich die Packungsbeilage 20, der in der Mitte und unten in der hier dargestellten Abbildung vom Packungseinsatz 1 verdeckt wird. Die Verbindung zwischen der Packungsbeilage 20 und dem Packungseinsatz 1 kann auf mehrere Arten ausgeführt sein: Durch eine Banderole, die beispielsweise aus Papier, Kunststoffband oder leichtem Kartonmaterial gebildet ist, durch eine magnetische Verbindung, durch eine Klettverschlussverbindung, durch eine Heftverbindung, durch eine Klebverbindung oder durch eine Haftmeltverbindung. Bei einer Banderole wird um beide Produkte, die übereinander liegen, quer zur Längsrichtung eine Schlaufe gewickelt, die dafür sorgt, dass beide Elemente nur durch Aufbrechen der Banderole voneinander getrennt werden können. Die oben genannten Verbindungsarten sind kostengünstig und auf einfache Weise ausführbar.

Des Weiteren kann man in Fig. 9 erkennen, dass die Grifffelder 17 direkt übereinander liegen und bereits flächig miteinander verklebt sind, so dass die Dosierhilfe bzw. das Zusatzprodukt 6 nach Ablösen vom Rahmen 5 nur noch an den Behälterfeldern 19 gefaltet werden muss, so dass sich ein Schutzbereich ergibt, wie in Fig. 2 abgebildet. Das Ablösen der Dosierhilfe von dem Rahmen 5 wird erleichtert durch Angreifen an der Ausnehmung 10, weil dort die Trennstanzlinie 13 bereits teilweise freigelegt ist.

Darüber hinaus kann der Fig. 9 entnommen werden, dass eine längliche und insbesondere gerade Ausbildung des Führungsrandes 7 für eine maschinelle Verarbeitung in einer Verpackungsstraße sehr gut geeignet ist. In der hier dargestellten Ausführungsform dient die Lasche 9 als Entnahmehilfe beim Herausziehen und/oder dazu, den Packungseinsatz 1 von der Packungsbeilage 20 auf einfache Weise abzutrennen, die hier miteinander verklebt sind.

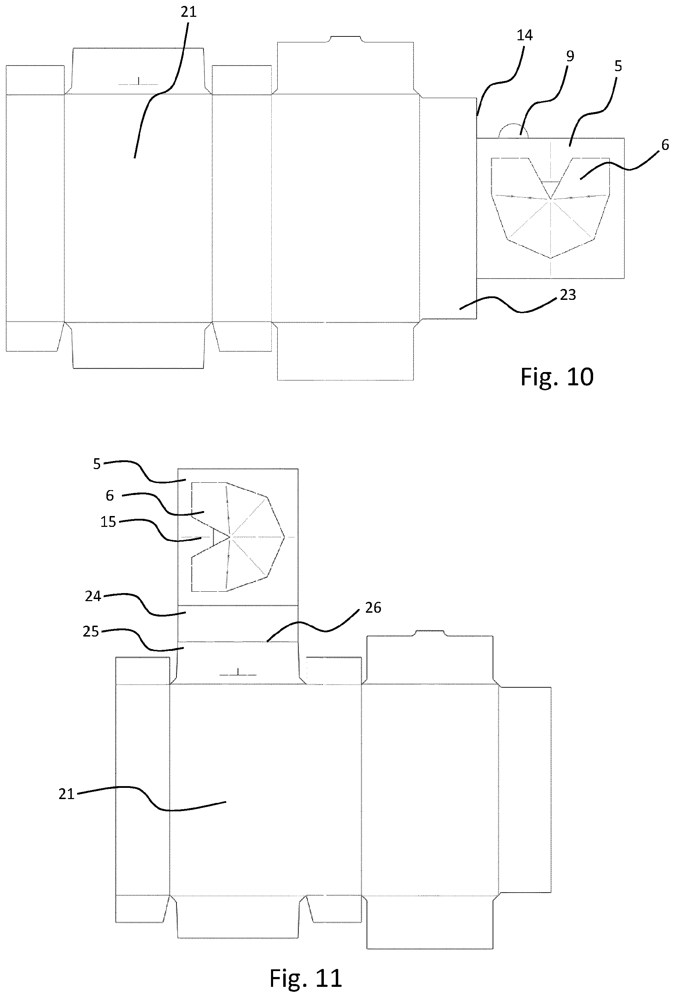

Fig. 10 zeigt eine alternative Produktkombination, wobei der Packungseinsatz in einem einstückigen Zustand direkt mit einer Faltschachtel 21 verbunden ist. Die Faltschachtel 21 ist ein seit langem bekannter quaderförmiger Behälter, der in verschiedenen Industrien seit Jahrzehnten eingesetzt wird. In der dargestellten Ausführungsform ist die Verbindung zwischen Packungseinsatz und Faltschachtel 21 an einer Klebelasche 23 ausgeführt, an der über eine Falzlinie 22 der Packungseinsatz angebracht ist. Der Vorteil bei dieser Ausgestaltung ist, dass der Packungseinsatz nicht mehr mit der Faltschachtel 21 durch Kleben o. ä. verbunden werden braucht, sondern aus dem Karton- oder Kunststoffmaterial sofort ausgestanzt bzw. ausgeschnitten werden kann. In Fig. 10 erkennt man, dass der Packungseinsatz mit Rahmen 5 und Zusatzprodukt 6 dem in Fig. 1 dargestellten entspricht. Möchte der Benutzer der Produktkombination gemäß Fig. 10 das Zusatzprodukt 6 nutzen, so öffnet er das fertige, geschlossene Produktbehältnis, entnimmt das Hauptprodukt und bearbeitet das Produktbehältnis, bis er, wie oben unter Bezugnahme auf Fig. 9 beschrieben, die Packungsbeilage 20 und/oder das Zusatzprodukt 6 von dem Rahmen 5 abtrennen kann. Eine Anwendung ergibt sich bei Pulvern oder Granulaten in Verpackungen, die oben einen Freiraum aufweisen, der technisch bedingt nach dem Abfüllen der Produkte entsteht. Dieser Freiraum dient dem Benutzer bzw. Verbraucher dazu, den Packungseinsatz 1 zusammen mit dem Zusatzprodukt 6 und der Packungsbeilage 20 entlang der Perforation des Klebrands der Faltschachtel 21 zu trennen.

Eine weitere, alternative Ausführungsform einer Produktkombination mit Faltschachtel und Packungseinsatz ist in Fig. 11 dargestellt. Im Unterschied zur Ausführungsform nach Fig. 10 ist der Packungseinsatz an einer Deckellasche 25 und eine Zwischenlasche 24 angebracht, die über eine Stanzlinie 26 miteinander verbunden sind. Auch hier ist das Zusatzprodukt 6 eine Dosierhilfe wie oben unter Bezugnahme auf die Figuren 1, 9 und 10 beschrieben. Bei beiden Ausführungsformen nach Fig. 10 und Fig. 11 gilt alternativ, dass beim Vorkonfektionieren, also beim Vorbereiten des Verpackungsbehältnisses, lediglich das Hauptprodukt noch in das Behältnis eingeschoben werden muss, wobei der Produkteinsatz mit einer Beilage ausgestattet werden kann. So kann beispielsweise eine Packungsbeilage aus Dünndruckpapier dem Verpackungsbehältnis bzw. der Produktkombination hinzugefügt werden, ohne bestehende Herstellungsstraßen mit sehr hohem Aufwand anpassen zu müssen.

Mit dem Gegenstand der vorliegenden Erfindung wird eine Produktkombination aus einem teilbaren Packungseinsatz und einer Beilage bereitgestellt, die einen Mehrwert für den Benutzer des Hauptprodukts bietet, im Wesentlichen auf denselben Verpackungsstraßen bzw. mit den gleichen Herstellungsverfahren wie bisher verarbeitet werden kann, die Komplexität des Verpackungsprozesses nicht erhöht und somit kaum zusätzliche Kosten erzeugt.

## Patentansprüche

1. Produktkombination aus einem Packungseinsatz (1) und einer Beilage (20), wobei der teilbare Packungseinsatz (1) ein einteiliger Zuschnitt (3) ist, der einen Rahmen (5) und ein Zusatzprodukt (6) umfasst,
wobei das Zusatzprodukt (6) und der Rahmen (5) in einem ersten Zustand verbunden sind, so dass der Packungseinsatz (1) eine im Wesentlichen flache Materiallage mit mindestens einem Führungsrand (7) bildet,
wobei die Produktkombination dazu eingerichtet ist, in einer Verarbeitungsmaschine geführt zu werden, und
wobei das Zusatzprodukt (6) in einem zweiten, auf den ersten Zustand folgenden Zustand von dem Rahmen (5) gelöst und funktionsgemäß zur Verwendung eingerichtet ist,
**dadurch gekennzeichnet, dass**
der Packungseinsatz (1) und die Beilage (20) lösbar miteinander verbunden sind und die Produktkombination geeignet zum Einlegen in ein Verpackungsbehältnis ist.

2. Produktkombination nach Anspruch 1, **dadurch gekennzeichnet, dass** der Packungseinsatz (1) aus Kartonmaterial oder Kunststoffmaterial ausgebildet ist.

3. Produktkombination nach einem der vorhergehenden Ansprüche, **dadurch gekennzeichnet, dass** auf dem Packungseinsatz (1) im ersten Zustand mindestens eine Stanzlinie (13) ausgebildet ist, die optional zusätzlich durch Erwärmen des Materials erzeugt wird.

4. Produktkombination nach einem der vorhergehenden Ansprüche, **dadurch gekennzeichnet, dass** der Packungseinsatz (1) im ersten Zustand im Wesentlichen rechteckig ausgebildet ist.

5. Produktkombination nach Anspruch 4, **dadurch gekennzeichnet, dass** der Packungseinsatz (1) die flache Materiallage auf mindestens einer Seite eine Lasche (9) aufweist.

6. Produktkombination nach Anspruch 4, **dadurch gekennzeichnet, dass** die flache Materiallage auf mindestens einer Seite eine Ausnehmung (10) aufweist.

7. Produktkombination nach Anspruch 6, **dadurch gekennzeichnet, dass** die Ausnehmung (10) als Eingriffspunkt zum Lösen des Zusatzprodukts (6) von dem Rahmen (5) eingerichtet ist.

8. Produktkombination nach einem der vorhergehenden Ansprüche, **dadurch gekennzeichnet, dass** das Zusatzprodukt (6) aus der Gruppe Dosierhilfe, Öffnungshilfe, Spatel, Griff, Löffel, Gabel, Messer oder einer Kombination daraus ausgewählt ist.

9. Produktkombination nach einem der vorhergehen Ansprüche, **dadurch gekennzeichnet, dass** die Beilage (20) aus der Gruppe Packungsbeilage, Folienbehälter, Etikett, Probepackung oder einer Kombination daraus ausgewählt ist.

10. Produktkombination nach einem der vorhergehenden Ansprüche, **dadurch gekennzeichnet, dass** die Verbindung zwischen Packungseinsatz (1) und Beilage (20) durch mindestens einen Klebpunkt, durch eine Banderole, durch eine Heftverbindung, durch eine magnetische Verbindung, durch eine Klettverschlussverbindung oder durch eine Haftmeltverbindung ausgebildet ist.

## Claims

1. A product combination comprising a packaging insert (1) and an insertion (20), wherein the divisible packaging insert (1) is a single-piece precut part (3) comprising a frame (5) and an add-on product (6),
wherein the add-on product (6) and the frame (5) are connected in a first state such that the packaging insert (1) forms a substantially flat material layer with at least one guiding edge (7),
wherein the product combination is arranged to be guided in a processing machine, and wherein the add-on product (6) is separated from the frame (5) in a second state following the first state and is arranged functionally for use,
**characterised in that**
the packaging insert (1) and the insertion (20) are separably connected with each other, and the product combination is suited for inserting into a packing container.

2. The product combination as claimed in claim 1, **characterised in that** the packaging insert (1) is formed of cardboard material or plastic material.

3. The product combination as claimed in any of the preceding claims, **characterised in that** at least one die-cut line (13) is formed on the packaging insert (1) in the first state which optionally is additionally generated by heating the material.

4. The product combination as claimed in any of the preceding claims, **characterised in that** the packaging insert (1) is formed substantially rectangularly in the first state.

5. The product combination as claimed in claim 4, **characterised in that** the flat material layer has a tab (9) on at least one side.

6. The product combination as claimed in claim 4, **characterised in that** the flat material layer has a recess (10) on at least one side.

7. The product combination as claimed in claim 6, **characterised in that** the recess (10) is arranged as an engagement point for separating the add-on product (6) from the frame (5).

8. The product combination as claimed in any of the preceding claims, **characterised in that** the add-on product (6) is selected from the group of dosing aid, opening aid, spatula, handle, spoon, fork, knife or a combination thereof.

9. The product combination as claimed in any of the preceding claims, **characterised in that** the insertion (20) is selected from the group of package leaflet, foil container, label, sample pack or a combination thereof.

10. The product combination as claimed in any of the preceding claims, **characterised in that** the connection between packaging insert (1) and insertion (20) is formed by at least one glue point, by a banderol, by a staple connection, by a magnetic connection, by a hook-and-loop connection or by a hotmelt connection.

## Revendications

1. Combinaison de produits constituée d'un insert d'emballage (1) et d'un élément d'accompagnement (20), dans laquelle l'insert d'emballage (1) divisible est une découpe monobloc (3) qui comprend un cadre (5) et un produit complémentaire (6),
dans laquelle le produit complémentaire (6) et le cadre (5), dans un premier état, sont reliés de sorte que l'insert d'emballage (1) forme une couche de matériau essentiellement plate avec au moins un bord de guidage (7),
dans laquelle la combinaison de produits est conçue pour être guidée dans une machine de traitement, et
dans laquelle le produit complémentaire (6), dans un second état suivant le premier état, est libéré du cadre (5) et fonctionnellement conçu pour une utilisation,
**caractérisée en ce que**
l'insert d'emballage (1) et l'élément d'accompagnement (20) sont reliés ensemble de façon amovible et la combinaison de produits est appropriée pour un placement dans un récipient d'emballage.

2. Combinaison de produits selon la revendication 1, **caractérisée en ce que** l'insert d'emballage (1) est réalisé dans un matériau carton ou un matériau plastique.

3. Combinaison de produits selon l'une des revendications précédentes, **caractérisée en ce que** sur l'insert d'emballage (1) dans le premier état est réalisée au moins une ligne de découpage (13) qui est optionnellement créée de façon complémentaire en chauffant le matériau.

4. Combinaison de produits selon l'une des revendications précédentes, **caractérisée en ce que** l'insert d'emballage (1) dans le premier état est réalisé de façon essentiellement rectangulaire.

5. Combinaison de produits selon la revendication 4, **caractérisée en ce que** la couche de matériau plate présente une languette (9) sur au moins un côté.

6. Combinaison de produits selon la revendication 4, **caractérisée en ce que** la couche de matériau plate présente un évidement (10) sur au moins un côté.

7. Combinaison de produits selon la revendication 6, **caractérisée en ce que** l'évidement (10) est conçu en tant que point d'intervention pour libérer le produit complémentaire (6) par rapport au cadre (5).

8. Combinaison de produits selon l'une des revendications précédentes, **caractérisée en ce que** le produit complémentaire (6) est sélectionné dans le groupe constitué d'une aide au dosage, d'une aide à l'ouverture, d'une spatule, d'une poignée, d'une cuillère, d'une fourchette, d'un couteau ou d'une combinaison de ceux-ci.

9. Combinaison de produits selon l'une des revendications précédentes, **caractérisée en ce que** l'élément d'accompagnement (20) est sélectionné dans le groupe constitué d'une notice d'emballage, d'un récipient souple, d'une étiquette, d'un emballage échantillon ou d'une combinaison de ceux-ci.

10. Combinaison de produits selon l'une des revendications précédentes, **caractérisée en ce que** la liaison entre l'insert d'emballage (1) et l'élément d'accompagnement (20) est réalisée par au moins un point de collage, par une bande, par une liaison adhésive, par une liaison magnétique, par une liaison à fermeture auto-agrippante ou par une liaison par adhérence par fusion.
